**Europäisches Patentamt**

**European Patent Office**

**Office européen des brevets**

(19)

(11) Veröffentlichungsnummer: **0 064 597**

**A1**

(12) # EUROPÄISCHE PATENTANMELDUNG

(21) Anmeldenummer: **82102799.2**

(22) Anmeldetag: **02.04.82**

(51) Int. Cl.³: **A 01 K 9/00**

(30) Priorität: **07.05.81 DE 3118027**

(43) Veröffentlichungstag der Anmeldung:
**17.11.82 Patentblatt 82/46**

(84) Benannte Vertragsstaaten:
**AT BE CH DE FR GB IT LI NL SE**

(71) Anmelder: **Förster, Martin, Dipl.-Ing.**
**Gerwigstrasse 27**
**D-7707 Engen(DE)**

(72) Erfinder: **Förster, Martin, Dipl.-Ing.**
**Gerwigstrasse 27**
**D-7707 Engen(DE)**

(74) Vertreter: **Engelhardt, Guido**
**Ehlersstrasse 17**
**D-7990 Friedrichshafen1(DE)**

(54) **Verfahren und Einrichtung zur Versorgung von Tieren.**

(57) Zum Versorgen von Lämmern, Kälbern, Rindern oder ähnlichen Tieren mit in einem Tränkeautomaten (2) selbsttätig aufbereitetem Futtermittel ist vorgesehen, diesen mittels eines zugeordneten Programmschaltwerkes (11) derart zu steuern, daß in dem Tränkeautomaten (2) jeweils nur eine bestimmte rationierte Futtermittelmenge aufbereitet wird oder dieser sich nur für eine wählbare Zeitspanne in Betrieb befindet und daß nach Entnahme der vorgegebenen Futtermittelmenge bzw. nach Ablauf der eingestellten Betriebszeit des Tränkeautomaten (2) oder nach Ablauf einer wählbaren Fütterungszeit die Futtermittelzufuhr zu einem Futterplatz (Sauger 3, 3') für eine bestimmte Zeitspanne eingestellt wird.

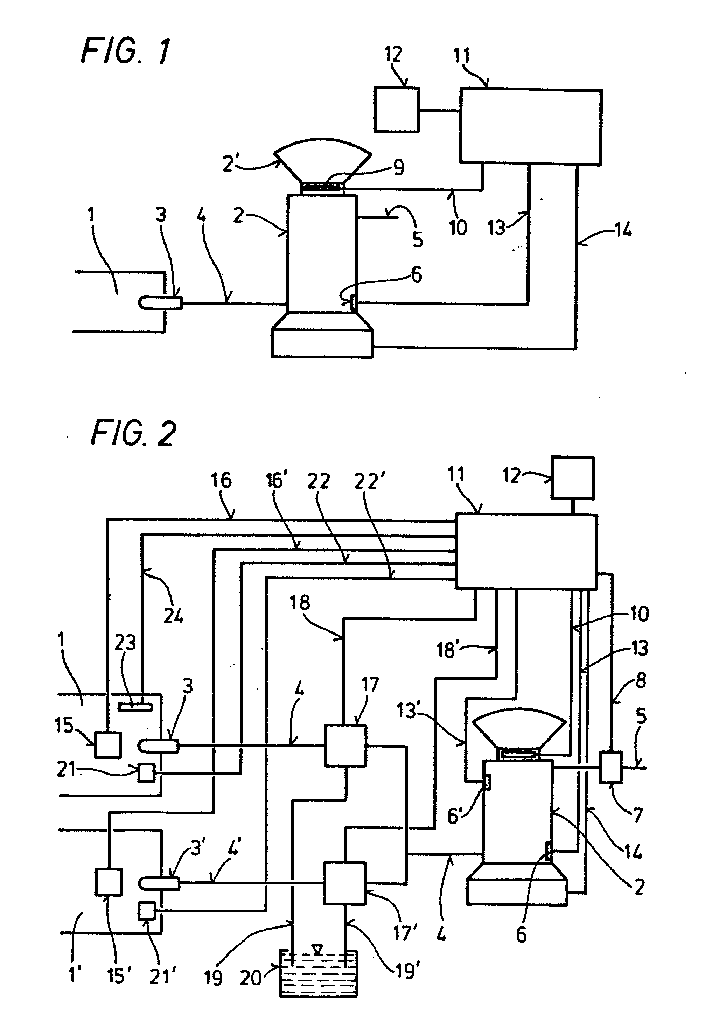

Auf diese Weise ist es mittels eines herkömmlichen Tränkeautomaten ohne großen zusätzlichen Bauaufwand möglich, Tiere in kontrollierter Weise mit aufbereitetem Futtermittel, das auch eine unterschiedliche Konzentration aufweisen kann, zu versorgen, so daß ein Überfressen ausgeschlossen ist. Und da die Pausenzeiten zwischen zwei Fütterungsperioden einstellbar sind, können auch Jungtiere während der Aufzuchtphase leicht entwöhnt werden (Fig. 2).

FIG. 2

EP 0 064 597 A1

**0064597**

# DIPL.-ING. GUIDO ENGELHARDT PATENTANWALT

**7990 Friedrichshafen**

Martin Förster

77o7 Engen

Verfahren und Einrichtung zum Versorgen von Tieren

Die Erfindung bezieht sich auf ein Verfahren zum Versorgen von Kälbern, Rindern oder ähnlichen Tieren, insbesondere Jungtieren, mit in einem Tränkeautomaten selbsttätig aus Trockenpulver und einer Flüssigkeit aufbereitetem Futtermittel, das die Tiere an einem oder mehreren Futterplätzen einnehmen können, sowie eine Einrichtung zur Anwendung dieses Verfahrens.

Die bisher zur selbsttätigen Fütterung von Tieren verwendeten Tränkeautomaten, mittels denen portionsweise warme trinkfertige Milch aus trockenem Milchpulver und Wasser hergestellt wird, liefern ständig beliebig viel Futter- mittel, so daß insbesondere für Jungtiere während der Auf- zuchtphase die Gefahr besteht, daß diese zu viel Futter aufnehmen und sich somit überfressen und dadurch krank werden. Durch das DE-GM 79 18 836 ist es zwar, um die Tiere nach Beendigung einer Fütterung zum Verlassen des Futterplatzes zu bewegen, bereits bekannt, den in der Saugleitung eines Tränkeautomaten fließenden Futtermittelstrom mit Hilfe eines steuerbaren Absperrventils zu unterbrechen;

.·/·.

als Entwöhnungshilfe und damit zur Verringerung des von dem Tränkeautomaten zur Verfügung gestellten teueren Futtermittels ist diese Art der Abschaltung jedoch nicht verwendbar, da eine exakte Einstellung der aufzunehmenden Futtermittelmenge nicht möglich ist.

Des weiteren ist auch die sogenannte Computerfütterung bekannt, bei der an einer Futterstelle elektronisch gesteuert eine vorbestimmte Menge an Futtermittel angesetzt und aufeinanderfolgend abgegeben wird. Der Fütterungsvorgang wird hierbei durch einen Sender ausgelöst, den das zu fütternde Tier mit sich führt. Da den Tieren eine bestimmte Kennung gegeben werden kann, wird in dem Computer gleichzeitig auch gespeichert, welches Tier bereits die ihm zugeteilte Futtermittelmenge abgerufen hat.

Auch bei dieser Fütterungsweise tritt häufig der Fall ein, daß ein Tier die Futterstelle nicht sofort verläßt, selbst wenn kein Futtermittel nachgeliefert wird. Dadurch ist die Futterstelle oftmals lange belegt. Des weiteren ist der Aufwand zur Installation und zum Betrieb derartiger Anlagen außerordentlich groß und die Bedienung setzt bestimmte Kenntnisse voraus, so daß diese Fütterungsweise in kleinen Betrieben nicht einsetzbar ist.

Es ist daher Aufgabe der Erfindung, ein Verfahren sowie eine Einrichtung zum Versorgen von Kälbern, Rindern oder ähnlichen Tieren zu schaffen, mittels denen die Tiere auch gruppenweise mit Hilfe eines herkömmlichen Tränkeautomaten kontrolliert mit Futter versorgt werden können, ohne daß es dazu eines großen Aufwandes bedarf. Vor allem soll es möglich sein, die Tiere nach Aufnahme einer bestimmten Futtermittelmenge oder nach einer wählbaren Zeitspanne zum Verlassen des Futterplatzes anzuhalten und insbesondere

./.

Jungtiere sollen während der Aufzuchtphase leicht von der Aufnahme der teueren aufbereiteten Milch entwöhnt werden. Außerdem soll ein automatischer Betrieb der Einrichtung und eine einfache Regelbarkeit sowie gegebenenfalls auch eine Einstellung unterschiedlicher Konzentrationen möglich sein. Des weiteren soll diese problemlos bedient werden können, ohne daß dazu besondere Fachkenntnisse nötig sind.

Gemäß der Erfindung ist das Verfahren zum Versorgen von Kälbern, Rindern oder ähnlichen Tieren, insbesondere von Jungtieren, mit in einem Tränkeautomaten selbsttätig aus Trockenpulver und einer Flüssigkeit aufbereitetem Futtermittel, das die Tiere an einem oder mehreren Futterplätzen einnehmen können, dadurch gekennzeichnet, daß der Tränkeautomat mittels eines diesem zugeordneten Programmschaltwerkes derart steuerbar ist, daß in dem Tränkeautomaten jeweils nur eine bestimmte rationierte Futtermittelmenge aufbereitet wird oder dieser sich nur für eine wählbare Zeitspanne in Betrieb befindet und daß nach Entnahme der vorgegebenen Futtermittelmenge bzw. nach Ablauf der eingestellten Betriebszeit des Tränkeautomaten oder nach Ablauf der wählbaren Fütterungszeit die Futtermittelzufuhr zu einem Futterplatz für eine bestimmte Zeitspanne eingestellt wird.

Sehr vorteilhaft ist es hierbei, beispielsweise zur Fütterung unterschiedlicher Tiergruppen, mittels des Programmschaltwerkes die Konzentration des aufzubereitenden Futtermittels durch Verändern der Menge des dem Tränkeautomaten zuführbaren Trockenpulvers und/oder der Flüssigkeit einzustellen, wobei die Zuführung des Trockenpulvers in zeitlicher Abhängigkeit von der Zuführung der Flüssigkeit, z. B. bei gleicher Flüssigkeitsmenge über die zu deren Zuführung eingestellten Zeitdauer erfolgen kann.

Zweckmäßig ist es ferner, mittels des Programmschaltwerkes die Betriebszeit des Tränkeautomaten oder die von diesem aufbereiteten Futtermittelrationen zu erfassen und auszuwerten und den Programmablauf des Programmschaltwerkes unmittelbar durch das zu fütternde Tier einzuschalten.

Zur Unterbrechung der Futtermittelzufuhr kann der Tränkeautomat mittels des Programmschaltwerkes für eine bestimmte Zeitspanne stillgesetzt werden. Es ist aber auch möglich, die von dem Tränkeautomaten zu einem Futterplatz führende Leitung mit Hilfe des Programmschaltwerkes für eine bestimmte Zeitspanne zu unterbrechen und/oder an Wasser, Luft oder ein anderes Medium anzuschließen.

Vorteilhaft ist es ferner, das Programmschaltwerk mittels einer diesem zugeordneten oder in dieses integrierten Zeitschaltuhr oder dgl. zu bestimmenden einstellbaren Betriebszeiten der Anlage einzuschalten.

Des weiteren ist es angebracht, die Futterbereitschaft eines Futterplatzes mittels eines diesem zugeordneten akustischen oder optischen Signalgebers den zu fütternden Tieren in Form eines Locksignals anzuzeigen, so daß diese zu den jeweiligen Fütterungszeiten angelocht werden.

Nach Aufnahme einer bestimmten Futtermittelmenge oder nach Beendigung der Fütterungszeit sollte dagegen das Tier mittels einer vorzugsweise durch das Programmschaltwerk auslösbaren akustischen oder mechanischen Schreckvorrichtung, beispielsweise in Form einer Peitsche, von dem Futterplatz vertrieben werden, damit andere Tiere an die Saugstelle gelangen können.

Die Einrichtung, mittels der dieses Verfahren in einfacher Weise anzuwenden ist, ist dadurch gekennzeichnet, daß der Tränkeautomat mit einem Programmschaltwerk versehen ist,

./.

mittels dem die Betriebszeit des Tränkeautomaten oder die
von diesem aufbereitete Futtermittelmenge einstellbar ist
und/oder mittels dem nach Ablauf der Betriebszeit des Tränkeautomaten oder nach Ablauf einer wählbaren Fütterungszeit
bzw. nach Aufnahme der vorgegebenen Futtermittelmenge die
Futtermittelzufuhr zu einem Futterplatz für eine bestimmte
Zeitspanne absperrbar ist.

Zur Veränderung der Konzentration des aufzubereitenden
Futtermittels ist es angebracht, die Zuführung des Trockenpulvers und/oder der Flüssigkeit durch an das Programmschaltwerk angeschlossene, diese beeinflussende Steuerglieder einzustellen. Dies kann in einfacher Ausgestaltung dadurch
bewerkstelligt werden, indem die Zuführung des Trockenpulvers
in zeitlicher Abhängigkeit von der Zuführung der Flüssigkeit,
beispielsweise mittels durch die Flüssigkeit betätigbarer
Druckschalter, gesteuert wird.

Zur Unterbrechung der Futtermittelzufuhr kann ferner in
einfacher Weise in die Futtermittelzuführungsleitung ein
durch das Programmschaltwerk betätigbares Absperr- oder
Wegeventil eingesetzt werden, mittels dem die Futtermittelzuführungsleitung für eine einstellbare Zeitspanne oder zum
Abschalten des Futterplatzes zeitweise an eine Luft, Wasser
oder ein anderes Medium führende Leitung anschließbar ist.

Angebracht ist es des weiteren, das Programmschaltwerk mit
einem unmitrelbar am Futterplatz angeordneten Empfänger als
Schaltglied zu verbinden, mittels dem das Programmschaltwerk
unmittelbar durch das zu fütternde Tier einschaltbar ist.
Auch sollte das Programmschaltwerk mit einer zusätzlichen
Zeitschaltuhr oder dgl. versehen sein, mittels der dieses
zu bestimmten einstellbaren Betriebszeiten der Anlage einschaltbar ist.

Zweckmäßig ist es ferner, die Futterplätze mit einem akustischen oder optischen Signalgeber zur Anzeige der Futterbereitschaft zu versehen, so daß die Tiere zu den jeweiligen Fütterungszeiten angelockt werden.

Außerdem können die Futterplätze mit einer vorzügsweise durch das Programmschaltwerk nach Entnahme einer bestimmten Futtermittelmenge oder nach Beendigung der Fütterungszeit auslösbaren akustischen oder mechanischen Schreckvorrichtung, beispielsweise in Form einer Peitsche, zur Vertreibung des Tieres ausgestattet werden, um die Tiere rasch zum Verlassen des Futterplatzes zu bewegen.

Mittels des erfindungsgemäßen Verfahrens bzw. der Einrichtung zur Anwendung dieses Verfahrens ist es problemlos möglich, Tiere in kontrollierter Weise mit aufbereitetem Futtermittel zu versorgen, ohne daß es dazu eines größeren Aufwandes bedarf. Wird nämlich dem Tränkeautomaten ein in besonderer Weise steuerbares Programmschaltwerk zugeordnet, so kann ohne Schwierigkeiten die Futtermittelzufuhr nach einer bestimmten Fütterungszeit oder der Aufnahme einer bestimmten Futtermittelmenge für eine wählbare Zeitspanne unterbrochen werden, so daß die Futteraufnahme bei Tieren geordnet ist. Ein Überfressen ist dadurch ausgeschlossen. Auch verlassen die Tiere, sobald bei abgesperrter Saugleitung beispielsweise Wasser anstelle von Milch angesaugt wird, sehr rasch den Futterplatz, so daß dieser nicht blockiert wird und die Fütterung aller Tiere einer Gruppe, wobei den einzelnen Gruppen auch unterschiedliche Futtermittelmengen, Futtermittel in unterschiedlichen Konzentrationen oder unterschiedliche Fütterungszeiten zugeordnet werden können ohne zusätzlichen Zeitaufwand erfolgen kann. Vor allem aber ist von Vorteil, daß mittels einstellbarer Pausenzeiten zwischen zwei Fütterungsperioden insbesondere Jungtiere während der Aufzucht leicht zu entwöhnen sind, da diese statt der
teueren aufbereiteten Milch mehr und mehr Rau- und Kraftfutter fressen. Auf diese Weise kann eine erhebliche Menge
an teuerem Milchpulver  eingespart werden.

Die Bedienung des Programmschaltwerkes wie auch die Einstellung der einzelnen Schaltvorgänge sind hierbei in einfacher Weise und ohne daß es dazu besonderer Kenntnisse
bedarf, vorzunehmen. Des weiteren ist auch der Bauaufwand
gering. Nahezu alle herkömmlichen Tränkeautomaten können
vielmehr in der vorgeschlagenen Weise ausgerüstet und gesteuert werden. Ein vielseitiger Einsatz ist dadurch gewährleistet.

In der Zeichnung sind zwei Ausführungsbeispiele der gemäß
der Erfindung ausgebildeten Einrichtung zum Versorgen von
Tieren mittels eines Tränkeautomaten in schematischer Weise
dargestellt und nachfolgend im einzelnen erläutert. Hierbei
zeigen:

Fig. 1   einen mit einem Programmschaltwerk versehenen
         Tränkeautomaten zur kontrollierten Versorgung
         eines Futterplatzes mit Futtermittel und

Fig. 2   den Tränkeautomaten mit Programmschaltwerk
         nach Fig. 1 zur kontrollierten Versorgung
         zweier Futterplätze mit Futtermittel.

Bei dem Ausführungsbeispiel nach Fig. 1 wird der Futterplatz
1 mit Futtermittel versorgt, das von einem Tränkeautomaten 2
selbsttätig aufbereitet wird. Sobald ein Tier an einem dem
Futterplatz 1 zugeordneten Sauger 3 saugt, kann diesem über
eine Leitung 4 aus dem Tränkeautomaten 2, in dem aus einem
aus einem Vorratsbehälter 2' zugeführten Trockenpulver
durch Zugabe von Wasser aus einer Leitung 5 Futtermittel aufbereitet wird, dieses zuströmen.

./.

Um die Futtermittelaufnahme in kontrollierter Weise bewerkstelligen zu können, ist an den Tränkeautomaten 2 ein Programmschaltwerk 11 angeschlossen, das den Tränkeautomaten 2 steuert und das durch diesen eingeschaltet wird. Dazu ist in dem Tränkeautomaten 2 ein Druckschalter 6 eingebaut, der über eine Leitung 13 mit dem Programmschaltwerk 11 verbunden ist und dieses ist über eine weitere Leitung 14 an den Tränkeautomaten 2 angeschlossen, um diesen in Betrieb zu setzen oder auszuschalten. Ferner ist das Programmschaltwerk 11 mit einer Zeitschaltuhr 12, die auch in diesen integriert sein kann, ausgerüstet, mittels der dieser zu bestimmten Fütterungszeiten eingeschaltet werden kann.

Ist während einer Fütterungsperiode das Programmschaltwerk 11 eingeschaltet und betritt ein Tier den Futterplatz 1, so kann dieses eine bestimmte Futtermittelmenge oder während einer bestimmten Zeit mehr oder weniger viel Futtermittel aufnehmen. Mit Hilfe des Programmschaltwerkes 11 können beispielsweise die in dem Tränkeautomaten 2 aufzubereitenden Futtermittelrationen vorgegeben werden oder es ist die Zeit einstellbar, in der der Tränkeautomat in Betrieb bleibt. Mittels des Endschalters 6 wird dabei der Beginn eines Fütterungsvorganges wie auch die Anzahl der aufbereiteten Portionen dem Programmschaltwerk 11 signalisiert.

Sobald jedoch die vorgegebene Futtermittelmenge aufgenommen bzw. die Fütterungszeit abgelaufen ist, wird der Tränkeautomat 2 gesperrt, d. h. über die Leitung 4 wird während einer einstellbaren Pausenzeit nur noch Luft angesaugt, da in dem Tränkeautomat 2 während dieser Zeit kein Futtermittel aufbereitet wird. Da die Tiere bereits nach kurzer Zeit feststellen, daß nach Beendigung einer Fütterung kein Futtermittel mehr zur Verfügung steht, verlassen diese rasch den Futterplatz 1, so daß die Fütterung einer Gruppe von Tieren nahezu ohne Störungen abläuft.

Um die Fütterung zu bestimmten Tageszeiten vornehmen zu können, ist das Programmschaltwerk 11 des weiteren mit einer Zeitschaltuhr 12 ausgerüstet, mittels der dieser, und damit auch der Tränkeautomat 2, nur zu vorgewählten Zeiten einschaltbar sind.

Bei dem Ausführungsbeispiel nach Fig. 2 werden von dem Tränkeautomaten 2 zwei Futterplätze 1 und 1' mit aufbereitetem Futtermittel versorgt, um beispielsweise zwei Gruppen von Tieren unterschiedliche Mengen an Futtermittel zur Verfügung zu stellen. Die Sauger 3 und 3' sind hierbei über die Leitungen 4 und 4' an den Tränkeautomaten 2 angeschlossen und in diese sind Wegeventile 17 bzw. 17' eingesetzt, denen über Leitungen 18 bzw. 18' Steuerimpulse von dem Programmschaltwerk 11 zugeleitet werden können. Ferner sind die Futterplätze 1 und 1' mit Schaltelementen 15 bzw. 15' versehen, die über Leitungen 16 bzw. 16' ebenfalls mit dem Programmschaltwerk 11 verbunden sind und als Empfänger wirken.

Sobald ein Tier einen der Futterplätze 1 oder 1' aufsucht, um an dem Sauger 3 bzw. 3' aufbereitetes Futtermittel aufzunehmen, wird dies mittels des Schaltgliedes 15 bzw. 15', je nachdem welcher der Futterplätze betriebsbereit ist, dem Programmschaltwerk 11 signalisiert, durch den wiederum der Tränkeautomat 2, da diese über die Leitung 14 miteinander in Verbindung stehen, eingeschaltet wird; und zwar kann der Tränkeautomat 2 für eine bestimmte Zeitspanne betriebsbereit sein, so daß das Tier beispielsweise zwei Minuten lang das vorhandene Futtermittel aufnehmen kann oder durch diesen wird eine bestimmte Futtermittelration aufbereitet werden. Ist der Fütterungsvorgang beendet, wird durch das Programmschaltwerk 11 das Wegeventil 17 bzw. 17' umgeschaltet; und zwar wird die Leitung 4 bzw. 4' über eine Leitung 19 bzw. 19' an einen Wasserbehälter 2o angeschlossen. Anstelle der erwärmten Milch erhält das Tier durch Ansaugen jetzt kaltes Wasser. Dies jedoch veranlaßt das Tier, sofort den Futterplatz zu verlassen. Nach Ablauf der Pausenzeit wird durch das Programmschaltwerk 11 der Tränkeautomat 2 auf Milch um- und gleichzeitig abgeschaltet.

Da den Futterplätzen 1 und 1' optische oder akustische Signalgeber 21 bzw. 21' zugeordnet sind, die über Leitungen 22 bzw. 22' ebenfalls an das Programmschaltwerk 5 angeschlossen sind, kann den Tieren somit signalisiert werden, zu welchen Zeiten an welchem Futterplatz aufbereitetes Futtermittel zur Verfügung steht. Die Tiere können auf diese Weise zu den Fütterungszeiten angelockt werden.

Mittels des Programmschaltwerkes 11 ist es hierbei des weiteren möglich, eines der beiden Ventile 17 und 17' für eine bestimmte Zeitdauer derart zu schalten, daß nur einer der Futterplätze 1 oder 1' mit aufbereitetem Futtermittel versorgt wird. An dem anderen Futterplatz steht dagegen nur aus einem Sammelbehälter 2o ansaugbares Wasser zur Verfügung. Auf diese Weise ist die Möglichkeit gegeben, nur einer bestimmten Gruppe von Tieren zu einer bestimmten Zeit, die mittels der Zeitschaltuhr 12 eingestellt werden kann, eine bestimmte Futtermittelmenge anzubieten.

Mittels des Programmschaltwerkes 11 kann somit der Tränkeautomat 2 in einfacher Weise derart gesteuert werden, daß Milch nur noch in variablen Intervallen abgegeben wird und daß auch die Milchmenge und die sich an eine Futtermittelaufnahme anschließenden Pausenzeiten variabel sind. Dadurch wird sicher ein Überfressen und ein zu langes Verweilen eines Tieres an einem Futterplatz vermieden. Eine in solcher Weise ausgebildete Anlage ist besonders auch zur Aufzucht von Jungtieren geeignet, deren Milchportionen nach und nach zu verringern sind, wobei die Pausenzeiten verlängert werden, um die Tiere zu entwöhnen.

Des weiteren ist es mit Hilfe des Programmschaltwerkes 11 möglich, die Konzentration des in dem Tränkeautomaten 2 aus Trockenpulver, das diesem aus dem Vorratsbehälter 2' zugeführt wird, und über die Leitung 5 zuströmendem Wasser aufbereiteten Futtermittels zu verändern. Um dies zu bewerkstelligen, ist in die Leitung 5 ein Steuerventil 7 eingebaut, das über eine Leitung 8 mit dem Programmschaltwerk 11 in Verbindung steht. Die jeweils zugegebene Wassermenge kann somit geregelt werden, so daß bei gleicher Zugabemenge an Trockenpulver die Konzentration des aufbereiteten Futtermittels eingestellt werden kann. Die Konzentration des aufbereiteten Futtermittels kann aber auch durch Verändern der Menge des jeweils zugegebenen Trockenpulvers bestimmt werden.

Besonders einfach ist eine Konzentrationsänderung vorzunehmen, indem die Zuführung des Trockenpulvers in zeitlicher Abhängigkeit von der Zuführung des Wassers erfolgt. Dazu sind in dem Tränkeautomaten 2 zwei Druckschalter 6 und 6' eingebaut, die dem unteren und dem oberen Flüssigkeitsniveau zugeordnet sind und die über Leitungen 13 und 13' ebenfalls mit dem Programmschaltwerk 11 in Verbindung stehen. Außerdem ist in den Vorratsbehälter 2' ein Steuerglied 9 eingebaut, das über eine Leitung 1o an das Programmschaltwerk 11 angeschlossen ist.

./.

Durch die Steuerimpulse der Druckschalter 6 und 6' wird über das Programmschaltwerk 11 nicht nur das Steuerventil 7 geöffnet bzw. geschlossen, um dem Tränkeautomaten 2 eine bestimmte Menge an Flüssigkeit zuzuführen, sondern es wird auch das Steuerglied 9 beeinflußt. Dieses kann in der Weise gesteuert werden, daß, solange dem Tränkeautomaten 2 bei geöffnetem Steuerventil 7 Flüssigkeit zuströmt, auch Trockenpulver zugeführt wird. Ist diese Zeit kurz, da z. B. das Steuerventil 7 vollständig geöffnet ist, wird weniger Trockenpulver in den Tränkeautomaten 2 gelangen als wenn bei nur teilweise geöffnetem Steuerventil 7 die gleiche Flüssigkeitsmenge langsam zuströmt. Der durch die Anordnung der Druckschalter 6 und 6' bestimmten Flüssigkeitsmenge wird demnach mehr oder weniger Trockenpulver zugegeben, so daß auf diese Weise die Konzentration des aufbereiteten Futtermittels einstellbar ist.

An dem Futterplatz 1 kann somit ein Futtermittel mit einer anderen Konzentration den Tieren angeboten werden, als an dem Futterplatz 1'. In Abhängigkeit von den Schaltstellungen der Ventile 17 und 17' kann über das Programmschaltwerk 11 die jeweils erforderliche Konzentration des aufzubereitenden Futtermittels eingestellt werden.

Dem Futterplatz 1 ist des weiteren eine über eine Leitung 24 an das Programmschaltwerk 11 angeschlossene Schreckvorrichtung 23, die in Form einer Peitsche ausgebildet sein kann, zugeordnet, mittels der das gefütterte Tier nach Aufnahme einer bestimmten Futtermittelmenge oder nach Ablauf der Fütterungszeit vertrieben werden kann. Die Schreckvorrichtung 23 kann auch als akustischer Signalgeber ausgebildet sein. Das gefütterte Tier wird auf diese Weise veranlaßt, den Futterplatz rasch zu verlassen, so daß andere Tiere aufbereitetes Futtermittel aufnehmen können.

31. März 1982    e-
A 2630 EP

**DIPL.-ING. GUIDO ENGELHARDT PATENTANWALT**

**7990 Friedrichshafen**

Martin Förster

77o7 Engen

P a t e n t a n s p r ü c h e :

1. Verfahren zum Versorgen von Lämmern, Kälbern, Rindern oder ähnlichen Tieren, insbesondere Jungtieren, mit in einem Tränkeautomaten selbsttätig aus Trockenpulver und einer Flüssigkeit aufbereitetem Futtermittel, das die Tiere an einem oder mehreren Futterplätzen einnehmen können,

d a d u r c h   g e k e n n z e i c h n e·t ,

daß der Tränkeautomat (2) mittels eines diesem zugeordneten Programmschaltwerkes (11) derart steuerbar ist, daß in dem Tränkeautomaten (2) jeweils nur eine bestimmte rationierte Futtermittelmenge aufbereitet wird oder dieser sich nur für eine wählbare Zeitspanne in Betrieb befindet und daß nach Entnahme der vorgegebenen Futtermittelmenge bzw. nach Ablauf der eingestellten Betriebszeit des Tränkeautomaten (2) oder nach Ablauf einer wählbaren Fütterungszeit die Futtermittelzufuhr zu einem Futterplatz (Sauger 3, 3') für eine bestimmte Zeitspanne eingestellt wird.

./.

2. Verfahren nach Anspruch 1,

d a d u r c h   g e k e n n z e i c h n e t ,

daß mittels des Programmschaltwerkes (11), beispielsweise zur Fütterung unterschiedlicher Tiergruppen, die Konzentration des aufzubereitenden Futtermittels durch Verändern der Menge des dem Tränkeautomaten (2) zuführbaren Trockenpulvers und/oder der Flüssigkeit einstellbar ist.

3. Verfahren nach Anspruch 2,

d a d u r c h   g e k e n n z e i c h n e t ,

daß die Zuführung des Trockenpulvers in zeitlicher Abhängigkeit von der Zuführung der Flüssigkeit, beispielsweise bei gleicher Flüssigkeitsmenge über die zu deren Zuführung eingestellten Zeitdauer erfolgt.

4. Verfahren nach einem oder mehreren der Ansprüche 1 bis 3,

d a d u r c h   g e k e n n z e i c h n e t ,

daß mittels des Programmschaltwerkes (11) die Betriebszeiten des Tränkeautomaten (2) oder die von diesem jeweils aufbereiteten Futtermittelrationen erfaßt und ausgewertet werden.

5. Verfahren nach einem oder mehreren der Ansprüche 1 bis 4,

d a d u r c h   g e k e n n z e i c h n e t ,

daß der Programmablauf des Programmschaltwerkes (11) unmittelbar durch das zu fütternde Tier eingeschaltet wird.

./.

6. Verfahren nach einem oder mehreren der Ansprüche 1 bis 5,

d a d u r c h   g e k e n n z e i c h n e t ,

daß zur Unterbrechung der Futtermittelzufuhr der Tränkeautomat (2) mittels des Programmschaltwerkes (11) für
eine bestimmte Zeitspanne stillgesetzt wird.

7. Verfahren nach einem oder mehreren der Ansprüche 1 bis 5,

d a d u r c h   g e k e n n z e i c h n e t ,

daß zur Unterbrechung der Futtermittelzufuhr die von
dem Tränkeautomaten (2) zu einem Futterplatz (Sauger 3, 3')
führende Leitung (4, 4') mit Hilfe des Programmschaltwerkes (11) für eine bestimmte Zeitspanne unterbrochen
und/oder an Wasser, Luft oder ein anderes Medium angeschlossen wird.

8. Verfahren nach einem oder mehreren der Ansprüche 1 bis 7,

d a d u r c h   g e k e n n z e i c h n e t ,

daß das Programmschaltwerk (11) mittels einer diesem
zugeordneten oder einer in dieses integrierten Schaltuhr
(12) oder dgl. zu bestimmten einstellbaren Betriebszeiten
der Anlage eingeschaltet wird.

9. Verfahren nach einem oder mehreren der Ansprüche 1 bis 8,

d a d u r c h   g e k e n n z e i c h n e t ,

daß die Futterbereitschaft mittels eines dem jeweiligen
Futterplatz zugeordneten akustischen oder optischen Signalgebers (21, 21') den zu fütternden Tieren in Form
eines Locksignals angezeigt wird.

./.

1o. Verfahren nach einem oder mehreren der Ansprüche 1 bis 9,

d a d u r c h   g e k e n n z e i c h n e t ,

daß nach Aufnahme einer bestimmten Futtermittelmenge oder nach Beendigung der Fütterungszeit das Tier mittels einer vorzugsweise durch das Programmschaltwerk (11) auslösbaren akustischen oder mechanischen Schreckvorrichtung (23), beispielsweise in Form einer Peitsche, von dem Futterplatz (1, 1') vertrieben wird.

11. Einrichtung zum Versorgen von Kälbern, Rindern oder ähnlichen Tieren, insbesondere Jungtieren, mittels eines an einen oder mehrere Futterplätze angeschlossenen Tränkeautomaten zur selbsttätigen Aufbereitung von Futtermittel  aus Trockenpulver und Lösungsmittel,

d a d u r c h   g e k e n n z e i c h n e t ,

daß der Tränkeautomat (2) mit einem Programmschaltwerk (11) versehen ist, mittels dem die Betriebszeit des Tränkeautomaten (2) oder die von diesem aufbereitete Futtermittelmenge einstellbar ist und/oder mittels dem nach Ablauf der Betriebszeit des Tränkeautomaten (2) oder nach Ablauf einer wählbaren Fütterungszeit bzw. nach Aufnahme der vorgegebenen Futtermittelmenge die Futtermittelzufuhr zu einem Futterplatz (Sauger 3, 3') für eine bestimmte Zeitspanne absperrbar ist.

12. Einrichtung nach Anspruch  11,

d a d u r c h   g e k e n n z e i c h n e t ,

./.

daß zur Veränderung der Konzentration des aufzubereitenden Futtermittels die Zuführung des Trockenpulvers
und/oder der Flüssigkeit durch an das Programmschaltwerk
(11) angeschlossener diese beeinflussender Steuerglieder
(7, 9) einstellbar ist.

13. Einrichtung nach Anspruch 12,

d a d u r c h   g e k e n n z e i c h n e t ,

daß die Zuführung des Trockenpulvers in zeitlicher
Abhängigkeit von der Zufuhr der Flüssigkeit,beispielsweise mittels durch die Flüssigkeit betätigbarer Druckschalter (6, 6'),steuerbar ist.

14. Einrichtung nach einem oder mehreren der
Ansprüche 11 bis 13,

d a d u r c h   g e k e n n z e i c h n e t ,

daß zur Unterbrechung der Futtermittelzufuhr in die
Futtermittelzuführungsleitungen (4, 4') jeweils ein
durch das Programmschaltwerk (11) betätigbares Absperr-
oder Wegeventil ( 17, 17') eingesetzt ist, mittels dem
die Futtermittelzuführungsleitung (4, 4') für eine einstellbare Zeitspanne oder zum Abschalten des Futterplatzes zeitweise an eine Luft, Wasser oder ein anderes
Medium führende Leitung (19, 19') anschließbar ist.

15. Einrichtung nach einem oder mehreren der
Ansprüche 11 bis 14,

d a d u r c h   g e k e n n z e i c h n e t ,

daß das Programmschaltwerk (11) mit einem unmittelbar am Futterplatz (1, 1') angeordneten Empfänger (15, 15') als Schaltglied verbunden ist, mittels dem das Programmschaltwerk (11) unmittelbar durch das zu fütternde Tier einschaltbar ist.

16. Einrichtung nach einem oder mehreren der Ansprüche 11 bis 15,

d a d u r c h   g e k e n n z e i c h n e t ,

daß das Programmschaltwerk (11) mit einer Zeitschaltuhr (12) oder dgl. versehen ist, mittels der dieses zu bestimmten einstellbaren Betriebszeiten der Anlage einschaltbar ist.

17. Einrichtung nach einem oder mehreren der Ansprüche 11 bis 16,

d a d u r c h   g e k e n n z e i c h n e t ,

daß die Futterplätze (1, 1') mit einem akustischen oder optischen Signalgeber (21, 21') zur Anzeige der Futterbereitschaft versehen sind.

18. Einrichtung nach einem oder mehreren der Ansprüche 11 bis 17,

d a d u r c h   g e k e n n z e i c h n e t ,

daß die Futterplätze (1) mit einer vorzugsweise durch das Programmschaltwerk (11) nach Aufnahme einer bestimmten Futtermittelmenge oder nach Beendigung der Fütterungszeit

./.

**0064597**

auslösbaren akustischen oder mechanischen Schreckvorrichtung (23), beispielsweise in Form einer Peitsche,
zur Vertreibung des gefütterten Tieres versehen sind.

30. März 1982    e-1
A 2630 EP

FIG. 1

FIG. 2

**EUROPÄISCHER RECHERCHENBERICHT**

Europäisches
Patentamt

EP 82 10 2799.2

## EINSCHLÄGIGE DOKUMENTE

KLASSIFIKATION DER
ANMELDUNG (Int. Cl.¹)

| Kategorie | Kennzeichnung des Dokuments mit Angabe, soweit erforderlich, der maßgeblichen Teile | betrifft Anspruch |
|---|---|---|
| X | GB - A - 1 125 829 (S.A.B.E.)<br>* Seite 4, Zeilen 6 bis 34; Fig. 1 bis 4 *<br>-- | 1,2,5,6,<br>11,12 |
| X | DE - B - 1 657 063 (A. TARTAR)<br>* Spalte 2 bis Spalte 4, Zeile 29; Fig. 1 *<br>-- | 1,2,6,<br>10,12,<br>18 |
| X | US - A - 3 037 481 (H.E. KLOSS)<br>* Spalte 1, Zeile 54 bis Spalte 2, Zeile 57; Fig. 1, 2, 8, 11, 13, 14 *<br>-- | 1,2,5,6,<br>11 |
| A | US - A - 4 181 097 (J. BETSUNO)<br>* ganzes Dokument *<br>-- | 1,8,11,<br>16 |
| D,A | DE - U1 - 7 918 836 (M. FÖRSTER)<br>* Ansprüche 1, 2 *<br>---- | 1,7 |

A 01 K 9/00

RECHERCHIERTE
SACHGEBIETE (Int. Cl.³)

A 01 K 5/02
A 01 K 9/00

KATEGORIE DER
GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

| | Der vorliegende Recherchenbericht wurde für alle Patentansprüche erstellt. |
|---|---|

| Recherchenort | Abschlußdatum der Recherche | Prüfer |
|---|---|---|
| Berlin | 07-07-1982 | SCHOFER |

EPA form 1503.1   06.78